# EUROPÄISCHE PATENTSCHRIFT

(11) **EP 2 416 133 B1**
(45) Veröffentlichungstag und Bekanntmachung des Hinweises auf die Patenterteilung: **24.01.2018**
(21) Anmeldenummer: 11006339.3
(22) Anmeldetag: 02.08.2011
(51) Int. Cl.: G01G 23/04, G01G 3/12, G01L 1/06, G01G 3/14

(54) **Kraftmessvorrichtung und Waage**
Force measurement device and scales
Dispositif de mesure de force et balance

(30) Priorität: 03.08.2010 DE 102010033143
(43) Veröffentlichungstag der Anmeldung: 08.02.2012
(73) Patentinhaber: Soehnle Industrial Solutions GmbH, 71522 Backnang (DE)
(72) Erfinder: Gerster, Stephan, 53343 Wachtberg-Pech (DE); Schurr, Michael, 71540 Murrhardt (DE); Stahl, Albrecht, 71560 Sulzbach (DE)
(74) Vertreter: Hoffmann, Jürgen

(56) Entgegenhaltungen:
- CN-U- 2 086 900
- US-A- 4 267 724
- US-A- 4 375 243
- US-A- 4 556 115
- US-A- 4 711 314
- US-A- 5 786 549
- US-A1- 2004 025 586
- US-A1- 2006 037 409
- US-A1- 2008 047 662
- US-A1- 2010 162 824
- US-B1- 6 460 399
- US-B1- 6 812 413

## Beschreibung

Die Erfindung betrifft eine Kraftmessvorrichtung, die einen ersten Kraftaufnehmer, dem ein erster Messbereich zugeordnet ist, und einen zweiten Kraftaufnehmer, dem ein zweiter - vom ersten Messbereich verschiedener - Messbereich zugeordnet ist, aufweist, wobei die Kraftaufnehmer mechanisch in Reihe geschaltet sind.

Die Erfindung betrifft außerdem eine Waage mit mehreren Wägezellen.

Zum Messen von Kräften werden Kraftaufnehmer verwendet. Zumeist weisen diese einen Federkörper auf, der sich unter der zu messenden Kraft verformt und dessen Verformung beispielsweise mit Hilfe von Dehnungsmessstreifen gemessen wird. Je größer die einwirkende Kraft ist, umso größer ist die Verformung. Speziell zur Messung von Gewichtskräften sind die in Waagen eigebauten Kraftaufnehmer als Wägezellen ausgebildet.

Der Messbereich der bekannten Kraftaufnehmer ist begrenzt. Dies insbesondere deshalb, weil der Federkörper nicht beliebig elastisch verformbar ist. Es ist zwar möglich, den Messbereich durch Über- oder Untersetzungen, beispielsweise mit Hilfe von Hebelanordnungen, zu vergrößern oder zu verringern. Allerdings wird die relative Genauigkeit - abgesehen von Verlusten im mechanischen Übertragungssystem - im gleichen Verhältnis über bzw. untersetzt.

Insbesondere zur Feinmessung im Laborbereich sind Kraftaufnehmer - beispielsweise mit Tauchspulenanordnungen - bekannt, die einerseits eine hohe Genauigkeit und gleichzeitig einen großen Messbereich aufweisen. Diese Kraftaufnehmer sind jedoch sehr aufwändig, empfindlich und insbesondere teuer.

CN 2086900 U offenbart eine Raketenschubmeßvorrichtung, die ein einteiliges Kunststoffbauteil mit zwei Teilbereichen, an denen Dehnungsmessstreifen befestigt sind, aufweist. Mit der Vorrichtung können Raketenschübe bis zu einer Tonne gemessen werden.

US 4 375 243 A offenbart eine elektronische Waage, die zwei in Reihe geschaltete Wägezellen aufweist, wobei die Gewichtskraft des zu wiegenden Guts immer auf beide Wägezellen wirkt.

Aus US 4,711,314 ist ebenfalls eine Waage mit zwei in Reihe geschalteten Wägezellen bekannt. Die Wägezellen sind mittels Anschlägen vor einer Überbelastung geschützt.

US 2010 / 0162824 A1 offenbart einen Halbleitersensor der auf ein Wafersubstrat aufgebracht ist und Zugkräfte parallel zur Oberfläche des Wafersubstrats messen kann.

US 2008 / 047662 A1 offenbart eine Vorrichtung zum Messen einer Rohrleitungsverformung mittels eines am Rohr anliegenden und um das Rohr gewickelten optischen Lichtleiters. Aufgrund der Verformung verändert sich das Spektrum des Lichts beim Durchgang durch den Lichtleiter an den Verformungsstellen relativ zu dem Spektrum des Lichts beim Durchgang durch den optischen Lichtleiter an den unverformten Stellen des Rohrs.

Eine weitere Waage mit Überlastschutz ist aus US 5190117 bekannt. Es ist die Aufgabe der vorliegenden Erfindung einen Kraftaufnehmer anzugeben, der bei großer Genauigkeit einen großen Messbereich aufweist und der kostengünstig herstellbar ist.

Die Aufgabe wird durch eine Kraftmessvorrichtung nach Anspruch 1 gelöst, die dadurch gekennzeichnet ist, dass eine Entkopplungsvorrichtung vorhanden ist, die
a. eine Federvorrichtung aufweist, die nicht Teil des ersten Kraftaufnehmers ist, und die
b. ein gegen die Kraft der Federvorrichtung bewegliches Anschlagelement aufweist und die
c. den ersten Kraftaufnehmer über das Anschlagelement aus dem Kraftfluss entkoppelt und/oder mechanisch kurzschließt, wenn auf die Kraftmessvorrichtung eine Kraft einwirkt, die größer als ein Umschaltwert und/oder größer als die Nennlast des ersten Kraftaufnehmers und/oder größer als der Maximalwert des ersten Messbereichs ist.

Es ist die weitere Aufgabe der vorliegenden Erfindung eine Waage anzugeben, die es bei großer Genauigkeit gestattet - vorzugsweise ohne manuellen Umschaltvorgang - sowohl leichtes, als auch schweres Wiegegut zu wiegen.

Diese Aufgabe wird durch eine Waage mit einer erfindungsgemäßen Kraftmessvorrichtung gelöst.

Eine erfindungsgemäße Waage kann vorteilhafter Weise derart aufgebaut sein, dass sie sich nach außen wie eine Mehrbereichswaage oder wie eine Mehrteilungswaage verhält. Insbesondere ist es möglich, wahlweise sowohl leichteres, als auch schwereres Wiegegut mit großer Genauigkeit wiegen zu können ohne eine Bereichsumschaltung vornehmen zu müssen.

In besonders vorteilhafter Weise kann die erfindungsgemäße Waage als Postwaage ausgebildet sein, die es - insbesondere ohne manuelle Bereichsumschaltung - ermöglicht sowohl leichte Briefe, als auch schwerere Pakete zu wiegen. Hierzu kann die Waage beispielsweise einen ersten Messbereich von 0 bis 3 kg mit einer Teilung von einem Gramm aufweisen, wobei die zur Messung der Gewichtskraft die von einer ersten Wägezelle erzeugten Signale ausgewertet werden und die von einer zweiten - größer dimensionierten - Wägezelle erzeugten Signale unberücksichtigt bleiben. Außerdem kann die Waage einen zweiten Messbereich von 3 kg bis 15 kg mit einer Teilung von 5 Gramm und einen dritten Messbereich von 15 kg bis 35 kg mit einer Teilung von 10 Gramm aufweisen, wobei zur Messung der Gewichtskraft in diesen Messbereichen die von einer ersten Wägezelle erzeugten Signale unberücksichtigt bleiben und die von einer zweiten - größer dimensionierten - Wägezelle erzeugten Signale ausgewertet werden.

Die erfindungsgemäße Kraftmessvorrichtung kann vorteilhaft derart aufgebaut sein, dass der erste Kraftaufnehmer dazu ausgebildet ist, kleinere Kräfte zu messen, als der zweite Kraftaufnehmer und/oder dass der erste Kraftaufnehmer eine niedrigeren Nennlastwert aufweist, als der zweite Kraftaufnehmer. Insbesondere kann vorgesehen sein, dass der erste Messbereich ein unterer Messbereich ist und der zweite Messbereich ein oberer Messbereich, wobei der erste Messbereich und der zweite Messbereich sich überlappen oder zumindest aneinander grenzen.

Besonders vorteilhaft ist eine Ausführung, bei der jeder Kraftaufnehmer zumindest ein Messelement, insbesondere einen Dehnungsmessstreifen, zur Messung der Verformung eines Federkörpers bei Krafteinwirkung aufweist.

Bei einer besonderen Ausführung sind der erste Kraftaufnehmer einer ersten Messschaltung und der zweite Kraftaufnehmer einer zweiten Messschaltung zugeordnet.

Es kann alternativ jedoch auch vorgesehen sein, dass jeder Kraftaufnehmer derselben Messschaltung zugeordnet ist und die Messschaltung in Abhängigkeit von den gemessenen Kräften bzw. Gewichten entscheidet, ob sie die Messsignale des ersten oder des zweiten Kraftaufnehmers auswertet. Demgemäß kann konkret insbesondere vorgesehen sein, dass der erste Kraftaufnehmer und der zweite Kraftaufnehmer einer gemeinsamen Messschaltung zugeordnet sind, wobei die Messschaltung bei Kräften unterhalb eines Umschaltwertes Messwerte des ersten Kraftaufnehmers verarbeitet und bei Kräften größer oder gleich dem Umschaltwert - vorzugsweise automatisch Messwerte des zweiten Kraftaufnehmers verarbeitet.

Erfindungsgemäß ist eine Entkopplungsvorrichtung vorgesehen, die - vorzugsweise automatisch - den ersten Kraftaufnehmer aus dem Kraftfluss entkoppelt und/oder mechanisch kurzschließt, wenn auf die Kraftmessvorrichtung eine Kraft einwirkt, die größer als ein Umschaltwert und/oder größer als die Nennlast des ersten Kraftaufnehmers und/oder größer als der Maximalwert des ersten Messbereichs ist.

Die Entkopplungsvorrichtung weist ein ein gegen die Kraft einer Federvorrichtung bewegliches Anschlagelement auf.

Insbesondere um ein störendes federndes Nachgeben, das zu unerwünschten und die Messung verfälschenden Schwingungen führen kann, eines Krafteinleitungsbauteil bzw. einer Wiegefläche zu verhindern, ist bei einer ganz besonders vorteilhaften Ausführungsform vorgesehen, dass die Federvorrichtung vorgespannt ist.

Bei einer vorteilhaften Ausführung weist die Entkopplungsvorrichtung eine gegen die Kraft einer Federvorrichtung verschiebbares Krafteinleitungsbauteil bzw. Wiegefläche auf, wobei die Federvorrichtung mit einer Kraft vorgespannt ist, die größer ist, als die als ein Umschaltwert und/oder größer als die Nennlast des ersten Kraftaufnehmers und/oder größer als der Maximalwert des ersten Messbereichs ist. Bei dieser Ausführung ist die Gefahr des Auftretens von unerwünschten mechanischen Schwingungen der Entkopplungsvorrichtung besonders wirkungsvoll vermieden.

Bei einer vorteilhaften Ausführung der erfindungsgemäßen Waage ist eine erste der Wägezellen dazu ausgebildet, kleinere Gewichtskräfte zu messen, als die zweite Wägezelle. Es kann alternativ oder zusätzlich auch vorgesehen sein, dass eine erste der Wägezellen einen niedrigeren Nennlastwert aufweist, als die zweite Wägezelle.

Bei einer weiteren vorteilhaften Ausführung der erfindungsgemäßen Waage werden - vorzugsweise automatisch - jeweils die Messwerte derjenigen Wägezelle verarbeitet, in deren Messbereich das aufgelegte Gewicht liegt.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind.

Dabei zeigen:
- Fig. 1: schematisch eine erfindungsgemäße Waage und
- Fig. 2: schematisch die Funktionsweise der erfindungsgemäßen Waage.

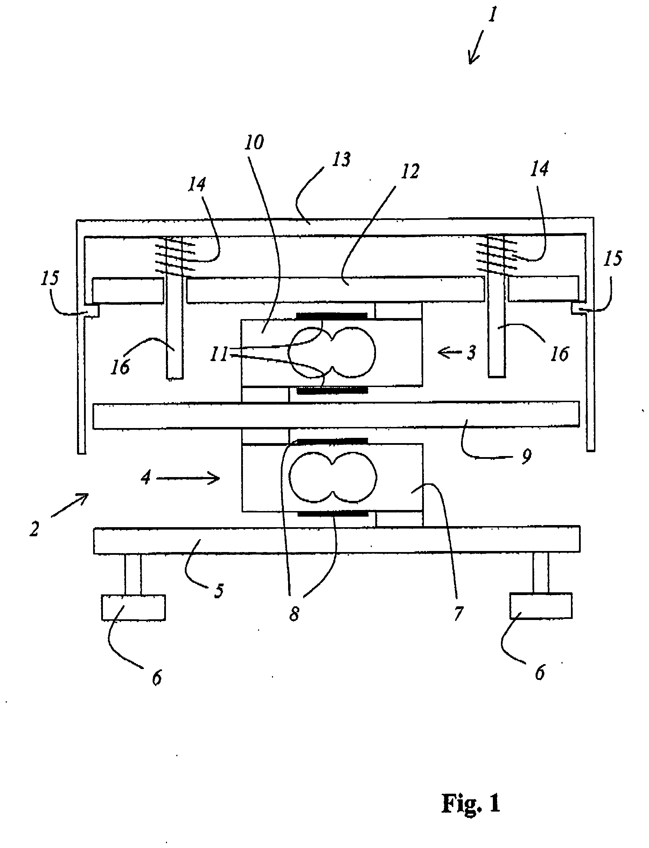

Fig. 1 zeigt eine Waage 1 mit einer erfindungsgemäßen Kraftmessvorrichtung 2. Die Kraftmessvorrichtung 2 weist einen ersten Kraftaufnehmer 3, dem ein erster Messbereich zugeordnet ist, und einen zweiten Kraftaufnehmer 4, dem ein zweiter - vom ersten Messbereich verschiedener - Messbereich zugeordnet ist, auf, wobei die Kraftaufnehmer 3, 4 mechanisch in Reihe geschaltet sind.

Der zweite Kraftaufnehmer 4 ist auf einem ersten Lastkreuz 5, das mit Standfüßen 6 versehen ist, angeordnet und weist einen einstückigen Doppelbiegebalken 7 auf, auf den Dehnungsmessstreifen 8 zur Messung der Verformung bei Belastung aufgeklebt sind.

Zwischen dem zweiten Kraftaufnehmer 4 und dem ersten Kraftaufnehmer 3 ist ein zweites Lastkreuz 9 angeordnet. Der erste Kraftaufnehmer 3 ist dazu ausgebildet, kleinere Gewichtskräfte zu messen, als der zweite Kraftaufnehmer 4. Demgemäß weist der erste Kraftaufnehmer 3 einen niedrigeren Nennlastwert auf, als der zweite Kraftaufnehmer 4.

Der erste Kraftaufnehmer 3 weist einen weiteren einstückigen Doppelbiegebalken 10 auf, auf den weitere Dehnungsmessstreifen 11 zur Messung der Verformung des Doppelbiegebalkens 10 bei Belastung aufgeklebt sind.

Der erste Kraftaufnehmer 3 trägt ein drittes Lastkreuz 12. Das Lastkreuz 12 trägt eine Wiegefläche 13, wobei sich die Wiegefläche 13 über vorgespannte Federvorrichtungen 14 auf dem dritten Lastkreuz 12 abstützt. Durch die Federvorrichtungen 14 werden Anschläge 15 der Wiegefläche 13 von unten gegen das Lastkreuz 12 gedrückt.

Die Federvorrichtungen 14 sind mit einer Kraft vorgespannt, die größer ist, als der Maximalwert des ersten Messbereichs. Hierdurch ist erreicht, dass die an der Unterseite der Wiegefläche 13 angeordneten Anschlagelemente 16 sich erst am zweiten Lastkreuz 9 abstützen und dadurch den zweiten Kraftaufnehmers 4 aus dem Kraftfluss entkoppeln, wenn das zu wiegende Gut einen Gewichtswert aufweist, der größer ist als der Maximalwert des ersten Messbereichs. Bei einem Wiegegut, das einen Gewichtswert aufweist, der kleiner ist, als der Maximalwert des ersten Messbereichs, werden die Anschlagelemente 16 der Wiegefläche 13 von den Federvorrichtungen 14 stets an das dritte Lastkreuz 12 gedrückt, so dass es nicht zu einem Schwingen der Wiegefläche 13 kommen kann.

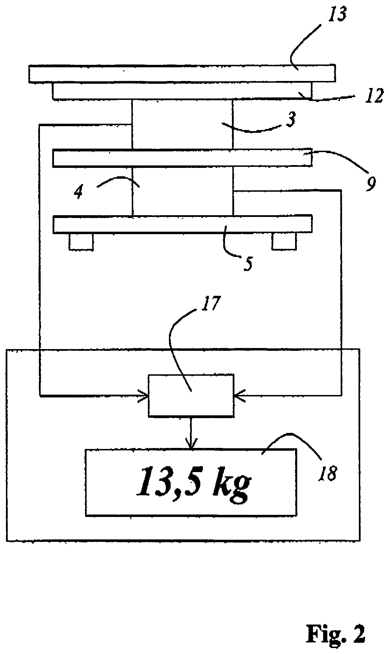

Fig. 2 zeigt schematisch die Funktionsweise der erfindungsgemäßen Waage.

Beide Kraftaufnehmer 3, 4 sind derselben Messschaltung 17 zugeordnet. Die Messschaltung 17 entscheidet automatisch in Abhängigkeit vom gemessenen Gewicht, ob sie die Messsignale des ersten Kraftaufnehmers 3 oder des zweiten Kraftaufnehmers 4 auswertet. Die Messschaltung 17 zeigt nach Auswertung der Messsignale einen Gewichtswert auf einer Anzeigevorrichtung 18 an.

Durch die Reihenschaltung des ersten Kraftaufnehmers 3 und des zweiten Kraftaufnehmers 4 erfasst der zweite Kraftaufnehmers 4 stets auch die Gewichtskraft des ersten Kraftaufnehmer 3 und der Bauteile, die dieser trägt, was die Messschaltung 17 bei der Auswertung der Messsignale berücksichtigt.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Waage
- 2: Kraftmessvorrichtung
- 3: erster Kraftaufnehmer
- 4: zweiter Kraftaufnehmer
- 5: erstes Lastkreuz
- 6: Standfüße
- 7: Doppelbiegebalken
- 8: Dehnungsmessstreifen
- 9: zweites Lastkreuz
- 10: weiterer Doppelbiegebalken
- 11: weitere Dehnungsmessstreifen
- 12: drittes Lastkreuz
- 13: Wiegefläche
- 14: Federvorrichtungen
- 15: Anschläge
- 16: Anschlagelemente
- 17: Messschaltung
- 18: Anzeigevorrichtung

## Patentansprüche

1. Kraftmessvorrichtung (2), die einen ersten Kraftaufnehmer (3), dem ein erster Messbereich zugeordnet ist, und einen zweiten Kraftaufnehmer (4), dem ein zweiter - vom ersten Messbereich verschiedener - Messbereich zugeordnet ist, aufweist, wobei die Kraftaufnehmer (3, 4) mechanisch in Reihe geschaltet sind, **dadurch gekennzeichnet, dass** eine Entkopplungsvorrichtung vorhanden ist, die
a. eine Federvorrichtung (14) aufweist, die nicht Teil des ersten Kraftaufnehmers (3) ist, und die
b. ein gegen die Kraft der Federvorrichtung (14) bewegliches Anschlagelement (16) aufweist und die
c. den ersten Kraftaufnehmer (3) über das Anschlagelement (16) aus dem Kraftfluss entkoppelt und/oder mechanisch kurzschließt, wenn auf die Kraftmessvorrichtung (2) eine Kraft einwirkt, die größer als ein Umschaltwert und/oder größer als die Nennlast des ersten Kraftaufnehmers (3) und/oder größer als der Maximalwert des ersten Messbereichs ist.

2. Kraftmessvorrichtung (2) nach Anspruch 1, **dadurch gekennzeichnet, dass** der erste Kraftaufnehmer (3) dazu ausgebildet ist, kleinere Kräfte zu messen, als der zweite Kraftaufnehmer (4) und/oder dass der erste Kraftaufnehmer (3) eine niedrigeren Nennlastwert aufweist als der zweite Kraftaufnehmer (4).

3. Kraftmessvorrichtung (2) nach einem der Ansprüche 1 oder 2, **dadurch gekennzeichnet, dass** der erste Messbereich ein unterer Messbereich ist und der zweite Messbereich ein oberer Messbereich, wobei der erste Messbereich und der zweite Messbereich sich überlappen oder zumindest aneinander grenzen.

4. Kraftmessvorrichtung (2) nach einem der Ansprüche 1 bis 3, **dadurch gekennzeichnet, dass** jeder Kraftaufnehmer (3, 4) zumindest ein Messelement, insbesondere einen Dehnungsmessstreifen (8), zur Messung der Verformung eines Federkörpers bei Krafteinwirkung aufweist.

5. Kraftmessvorrichtung (2) nach einem der Ansprüche 1 bis 4, **dadurch gekennzeichnet, dass** der erste Kraftaufnehmer (3) einer ersten Messschaltung und der zweite Kraftaufnehmer (4) einer zweiten Messschaltung zugeordnet sind.

6. Kraftmessvorrichtung (2) nach einem der Ansprüche 1 bis 4, **dadurch gekennzeichnet, dass** der erste Kraftaufnehmer (3) und der zweite Kraftaufnehmer (4) einer gemeinsamen Messschaltung zugeordnet sind, wobei die Messschaltung bei Kräften unterhalb eines Umschaltwertes Messwerte des ersten Kraftaufnehmers (3) verarbeitet und bei Kräften größer oder gleich dem Umschaltwert - vorzugsweise automatisch Messwerte des zweiten Kraftaufnehmers (4) verarbeitet.

7. Kraftmessvorrichtung (2) nach Anspruch 1, **dadurch gekennzeichnet, dass**
a. die Entkopplungsvorrichtung eine Verformungswegbegrenzung aufweist und/oder dass
b. die Federvorrichtung (14) vorgespannt ist.

8. Kraftmessvorrichtung (2) nach einem der Ansprüche 1 bis 7, **dadurch gekennzeichnet, dass** die Federvorrichtung (14) mit einer Kraft vorgespannt ist, die größer ist, als ein Umschaltwert und/oder größer als die Nennlast des ersten Kraftaufnehmers und/oder größer als der Maximalwert des ersten Messbereichs ist.

9. Waage (1), insbesondere Mehrbereichswaage oder Mehrteilungswaage, mit zumindest einer Kraftmessvorrichtung nach einem der Ansprüche 1 bis 8.

10. Waage (1) nach Anspruch 9, **dadurch gekennzeichnet, dass** eine erste Wägezelle den ersten Kraftaufnehmer (3) aufweist und/oder dass eine zweite Wägezelle den zweiten Kraftaufnehmer (4) aufweist.

11. Waage (1) nach Anspruch 10, **dadurch gekennzeichnet, dass**
a. den Wägezellen unterschiedliche - insbesondere aneinander grenzende - Messbereiche zugeordnet sind und/oder dass die Wägezellen mechanisch in Reihe geschaltet sind und/oder dass
b. die erste der Wägezellen dazu ausgebildet ist, kleinere Gewichtskräfte zu messen, als die zweite Wägezelle und/oder dass eine erste der Wägezellen einen niedrigeren Nennlastwert aufweist, als die zweite Wägezelle.

12. Waage (1) nach Anspruch 10 oder 11, **dadurch gekennzeichnet, dass** die Waage (1) -vorzugsweise automatisch - jeweils die Messwerte derjenigen Wägezelle verarbeitet, in deren Messbereich das aufgelegte Gewicht liegt.

13. Waage (1) nach einem der Ansprüche 10 bis 12, **dadurch gekennzeichnet, dass** die Entkopplungsvorrichtung - vorzugsweise automatisch - die Wägezellen mit dem niedrigeren Messbereich aus dem Kraftfluss entkoppelt und/oder mechanisch kurzschließt, wenn ein Gewicht aufgelegt ist, das größer als ein Umschaltwert und/oder größer als die Nennlast der Wägezellen mit dem niedrigeren Messbereich und/oder größer als der Maximalwert des niedrigeren Messbereichs ist.

14. Waage (1) nach Anspruch 13, **dadurch gekennzeichnet, dass** die Entkopplungsvorrichtung eine gegen die Kraft der Federvorrichtung (14) verschiebbare Wiegefläche (13) aufweist, wobei die Federvorrichtung (14) mit einer Kraft vorgespannt ist, die größer ist, als ein Umschaltwert und/oder größer als die Nennlast des ersten Kraftaufnehmers (3) und/oder größer als der Maximalwert des ersten Messbereichs ist.

## Claims

1. Force measurement device (2) which has a first force pickup (3), to which a first measuring range is assigned, and a second force pickup (4), to which a second measuring range, which is different from the first measuring range, is assigned, wherein the force pickups (3, 4) are connected mechanically in series, **characterized in that** an uncoupling device is present which
a. has a spring device (14) which is not part of the first force pickup (3), and which
b. has a stop element (16) which can move counter to the force of the spring device (14), and which
c. uncouples and/or mechanically short-circuits the first force pickup (3) from the force flux via the stop element (16) if a force which is greater than a switch-over value and/or greater than the rated load of the first force pickup (3) and/or greater than the maximum value of the first measuring range acts on the force measurement device (2).

2. Force measurement device (2) according to Claim 1, **characterized in that** the first force pickup (3) is designed to measure smaller forces than the second force pickup (4) and/or **in that** the first force pickup (3) has a lower rated load value than the second force pickup (4).

3. Force measurement device (2) according to one of Claims 1 and 2, **characterized in that** the first measuring range is a lower measuring range, and the second measuring range is an upper measuring range, wherein the first measuring range and the second measuring range overlap or at least partially adjoin one another.

4. Force measurement device (2) according to one of Claims 1 to 3, **characterized in that** each force pickup (3, 4) has at least one measuring element, in particular a strain gauge (8), for measuring the deformation of a spring body under force effect.

5. Force measurement device (2) according to one of Claims 1 to 4, **characterized in that** the first force pickup (3) is assigned to a first measuring circuit, and the second force pickup (4) is assigned to a second measuring circuit.

6. Force measurement device (2) according to one of Claims 1 to 4, **characterized in that** the first force pickup (3) and the second force pickup (4) are assigned to a common measuring circuit, wherein the measuring circuit processes measured values of the first force pickup (3) in the case of forces below a switch-over value, and preferably automatically processes measured values of the second force pickup (4) in the case of forces greater than or equal to the switch-over value.

7. Force measurement device (2) according to Claim 1, **characterized in that**
a. the uncoupling device has a deformation travel limiter and/or **in that**
b. the spring device (14) is prestressed.

8. Force measurement device (2) according to one of Claims 1 to 7, **characterized in that** the spring device (14) is prestressed with a force which is greater than a switch-over value and/or greater than the rated load of the first force pickup and/or greater than the maximum value of the first measuring range.

9. Scales (1), in particular multi-range scales or multi-partitioned scales, having at least one force measurement device according to one of Claims 1 to 8.

10. Scales (1) according to Claim 9, **characterized in that** a first weighing cell has the first force pickup (3), and/or **in that** a second weighing cell has the second force pickup (4).

11. Scales (1) according to Claim 10, **characterized in that**
a. different, in particular adjoining, measuring ranges are assigned to the weighing cells and/or **in that** the weighing cells are connected mechanically in series and/or **in that**
b. the first of the weighing cells is designed to measure smaller weight forces than the second weighing cell and/or **in that** a first of the weighing cells has a lower rated load value than the second weighing cell.

12. Scales (1) according to Claim 10 or 11, **characterized in that** the scales (1) process, preferably automatically, the respective measured values of that weighing cell in the measuring range in which the weight which has been put on lies.

13. Scales (1) according to one of Claims 10 to 12, **characterized in that** the uncoupling device, preferably automatically, uncouples and/or mechanically short-circuits the weighing cells with the relatively low measuring range from the force flux if a weight which is greater than a switch-over value and/or greater than the rated load of the weighing cells with the relatively low measuring range and/or greater than the maximum value of the relatively low measuring range is put on.

14. Scales (1) according to Claim 13, **characterized in that** the uncoupling device has a weighing area (13) which can be displaced counter to the force of the spring device (14), wherein the spring device (14) is prestressed with a force which is greater than a switch-over value and/or greater than the rated load of the first force pickup (3) and/or greater than the maximum value of the first measuring range.

## Revendications

1. Dispositif de mesure de force (2) comportant un premier capteur de force (3) auquel est associée une première plage de mesure, et un deuxième capteur de force (4) auquel est associée une deuxième plage de mesure qui est différente de la première plage de mesure, dans lequel les capteurs de force (3, 4) sont reliés mécaniquement en série, **caractérisé en ce qu'**il est prévu un dispositif de découplage qui
a. comporte un dispositif à ressort (14) ne faisant pas partie du premier capteur de force (3), qui
b. comporte un élément de butée (16) mobile en opposition à la force du dispositif à ressort (14), et qui
c. découple le premier capteur de force (3) par l'intermédiaire de l'élément de butée (16) du flux de force, et/ou le court-circuite mécaniquement lorsqu'une force agissant sur le dispositif de mesure de force (2) est supérieure à une valeur de basculement et/ou est supérieure à la charge nominale du premier capteur de force (3) et/ou est supérieure à la valeur maximale de la première plage de mesure.

2. Dispositif de mesure de force (2) selon la revendication 1, **caractérisé en ce que** le premier capteur de force (3) est conçu pour mesurer des forces inférieures à celles du deuxième capteur de force (4) et/ou **en ce que** le premier capteur de force (3) présente une valeur de charge nominale plus faible que celle du deuxième capteur de force (4).

3. Dispositif de mesure de force (2) selon l'une quelconque des revendications 1 et 2, **caractérisé en ce que** la première plage de mesure est une plage de mesure inférieure et **en ce que** la deuxième plage de mesure est une plage de mesure supérieure, dans lequel la première plage de mesure et la deuxième plage de mesure se superposent ou sont au moins adjacentes l'une à l'autre.

4. Dispositif de mesure de force (2) selon l'une quelconque des revendications 1 à 3, **caractérisé en ce que** chaque capteur de force (3, 4) comporte au moins une jauge de contrainte (8) destinée à mesurer la déformation d'un corps de ressort lors de l'action d'une force.

5. Dispositif de mesure de force (2) selon l'une quelconque des revendications 1 à 4, **caractérisé en ce que** le premier capteur de force (3) est associé à un premier circuit de mesure et **en ce que** le deuxième capteur de force (4) est associé à un deuxième circuit de mesure.

6. Dispositif de mesure de force (2) selon l'une quelconque des revendications 1 à 4, **caractérisé en ce que** le premier capteur de force (3) et le deuxième capteur de force (4) sont associés à un circuit de mesure commun, dans lequel le circuit de mesure traite des valeurs de mesure du premier capteur de force (3) pour des forces inférieures à une valeur de basculement et traite des valeurs de mesure du deuxième capteur de force (4) pour des forces supérieures ou égales à la valeur de basculement, de préférence de manière automatique.

7. Dispositif de mesure de force (2) selon la revendication 1, **caractérisé en ce que**
a) le dispositif de découplage présente une limite de course de déformation et/ou **en ce que**
b) le dispositif à ressort (14) est précontraint.

8. Dispositif de mesure de force (2) selon l'une quelconque des revendications 1 à 7, **caractérisé en ce que** le dispositif à ressort (14) est précontraint avec une force qui est supérieure à une valeur de basculement et/ou qui est supérieure à la charge nominale du premier capteur de force et/ou qui est supérieure à la valeur maximale de la première plage de mesure.

9. Balance (1), notamment balance à plage de mesures multiples ou balance à graduations multiples comportant au moins un dispositif de mesures de force comportant selon l'une quelconque des revendications 1 à 8.

10. Balance (1) selon la revendication 9, **caractérisé en ce qu'**une première cellule de pesage comporte le premier capteur de force (3) et/ou **en ce qu'**une deuxième cellule de pesage comporte le deuxième capteur de force (4).

11. Balance (1) selon la revendication 10, **caractérisée en ce que**
a) des plages de mesure différentes, notamment adjacentes les unes aux autres, sont associées aux cellules de pesage et/ou **en ce que** les cellules de pesage sont reliées mécaniquement en série et/ou **en ce que**
b) la première des cellules de pesage est conçue pour mesurer des forces pondérales inférieures à celles de la deuxième cellule de pesage et/ou **en ce qu'**une première des cellules de pesage présente une valeur de charge nominale inférieure à celle de la deuxième cellule de pesage.

12. Balance (1) selon la revendication 10 ou 11, **caractérisée en ce que** la balance (1) traite respectivement, de préférence de manière automatique, les valeurs de mesure de cellules de pesage dans la plage de mesure desquelles se situe le poids appliqué.

13. Balance (1) selon l'une quelconque des revendications 10 à 12, **caractérisée en ce que** le dispositif de découplage découple, de préférence de manière automatique, les cellules de pesage présentant la plage de mesure inférieure du flux de force et/ou les court-circuite mécaniquement lorsqu'un poids appliqué est supérieur à une valeur de basculement et/ou est supérieur à la charge nominale des cellules de pesage présentant la plage de mesure inférieure et/ou est supérieur à la valeur maximale de la plage de mesure inférieure.

14. Balance (1) selon la revendication 13, **caractérisée en ce que** le dispositif de découplage présente des surfaces de pesage (13) pouvant être déplacées en opposition à la force du dispositif à ressort (14), dans lequel le dispositif à ressort (14) est précontraint avec une force qui est supérieure à une valeur de basculement et/ou qui est supérieure à la charge nominale du premier capteur de force (3) et/ou qui est supérieure à la valeur maximale de la première plage de mesure.
